# EUROPEAN PATENT APPLICATION

(11) **EP 4 400 735 A1**
(43) Date of publication of application: **17.07.2024**
(21) Application number: 22867005.5
(22) Date of filing: 03.06.2022
(51) Int. Cl.: F16C 19/38, F16C 33/58, F16C 33/78, F16C 43/06

(54) **BEARING**

(30) Priority: 09.09.2021 JP 2021146676
(71) Applicant: Nippon Thompson Co., Ltd., Tokyo 108-8586 (JP)
(72) Inventor: SASAKI Satoshi, Mino-shi, Gifu 501-3763 (JP)
(74) Representative: Page White Farrer
(86) International application number: PCT/JP2022/022674
(87) International publication number: WO 2023/037675

(57) **Abstract**

A bearing includes a first raceway member having an annular first raceway surface on an outer circumferential surface thereof, a second raceway member having an annular second raceway surface facing the first raceway surface on an inner circumferential surface thereof, and a plurality of rolling elements arranged in an annular rolling path along the first and second raceway surfaces so as to contact the first and second raceway surfaces. At least one of the first and second raceway members has a rolling element feed port formed as an opening of the rolling path. The bearing further includes a lid member disposed at the rolling element feed port, and a fixing member inserted into a first hole, formed in the lid member, and a second hole, formed in the at least one member to communicate with the first hole, to extend in a direction crossing an axial direction.

## Description

### Technical Field

The present disclosure relates to a bearing. The present application claims priority based on Japanese Patent Application No. 2021-146676 filed on September 9, 2021, the entire contents of which are incorporated herein by reference.

### Background Art

A bearing having a feed port formed for feeding rolling elements into a rolling path between an inner ring and an outer ring and a lid member provided for closing the feed port is conventionally known. This type of technology is disclosed, for example, in Patent Literature 1 and Patent Literature 2.

Patent Literature 1 discloses a bearing in which the lid member is attached to the outer ring with a bolt. In this literature, the bolt is inserted into bolt holes, formed in the lid member and the outer ring, in an axial direction. Patent Literature 2 discloses a bearing in which the lid member is attached to the inner ring with a screw. In this literature as well, the screw is inserted into holes formed in the lid member and the inner ring in the axial direction. Patent Literature 3 discloses a bearing in which a plurality of rolling paths for rolling elements are formed side by side in an axial direction thereof.

### Citation List

### Patent Literature

Patent Literature 1: Japanese Patent Application Laid-Open No. 2011-106544
Patent Literature 2: Japanese Patent Application Laid-Open No. 2020-85123
Patent Literature 3: Japanese Patent Application Laid-Open No. H05-44721

### Summary of Invention

### Technical Problem

As described above, in the bearing disclosed in Patent Literature 1, the bolt for attaching the lid member to the outer ring is inserted in the axial direction. Thus, in the case where a bolt with a long shaft portion is used, the width of the bearing in the axial direction increases, making it difficult to reduce the size of the bearing in the axial direction.

The present disclosure is to provide a bearing capable of suppressing an increase in width in the axial direction thereof.

### Solution to Problem

A bearing according to the present disclosure includes: a first raceway member having an annular first raceway surface on an outer circumferential surface thereof; a second raceway member having an annular second raceway surface facing the first raceway surface on an inner circumferential surface thereof; and a plurality of rolling elements arranged in an annular rolling path along the first and second raceway surfaces so as to contact the first and second raceway surfaces. At least one of the first raceway member and the second raceway member has a rolling element feed port formed to communicate with the rolling path. The bearing further includes: a lid member disposed at the rolling element feed port; and a fixing member inserted into a first hole, formed in the lid member, and a second hole, formed in the at least one member to communicate with the first hole, to extend in a direction crossing an axial direction.

### Advantageous Effects of Invention

According to the present disclosure, it is possible to provide a bearing capable of suppressing an increase in width in the axial direction thereof.

### Brief Description of Drawings

FIG. 1 is a perspective view showing an external structure of a bearing according to Embodiment 1.
FIG. 2 is a cross-sectional view along the line segment II-II in FIG. 1.
FIG. 3 is a cross-sectional view along the line segment III-III in FIG. 2.
FIG. 4 is a perspective view showing an external structure of a bearing according to Variation 1 of Embodiment 1.
FIG. 5 is a partial cross-sectional view along the line segment V-V in FIG. 4.
FIG. 6 is a perspective view showing an external structure of a bearing according to Variation 2 of Embodiment 1.
FIG. 7 is a partial cross-sectional view along the line segment VII-VII in FIG. 6.
FIG. 8 is a perspective view showing an external structure of a bearing according to Variation 3 of Embodiment 1.
FIG. 9 is a partial cross-sectional view along the line segment IX-IX in FIG. 8.
FIG. 10 is a perspective view showing an external structure of a bearing according to Variation 4 of Embodiment 1.
FIG. 11 is a partial cross-sectional view along the line segment XI-XI in FIG. 10.
FIG. 12 is a partial cross-sectional view along an axial direction of a bearing according to Variation 5 of Embodiment 1.
FIG. 13 is a perspective view showing an external structure of a bearing according to Embodiment 2.
FIG. 14 is a cross-sectional view along the line segment XIV-XIV in FIG. 13.
FIG. 15 is a perspective view showing an external structure of a bearing according to Variation 1 of Embodiment 2.
FIG. 16 is a cross-sectional view along the line segment XVI-XVI in FIG. 15.
FIG. 17 is a perspective view showing an external structure of a bearing according to Variation 2 of Embodiment 2.
FIG. 18 is a cross-sectional view along the line segment XVIII-XVIII in FIG. 17.
FIG. 19 is a perspective view showing an external structure of a bearing according to Embodiment 3.
FIG. 20 is a partial cross-sectional view along the line segment XX-XX in FIG. 19.
FIG. 21 is an enlarged view showing a configuration of the vicinity of a lid member in the above bearing.
FIG. 22 is a perspective view showing an external structure of a bearing according to a variation of Embodiment 3.
FIG. 23 is a partial cross-sectional view along the line segment XXIII-XXIII in FIG. 22.
FIG. 24 is an enlarged view showing a configuration of the vicinity of a lid member in the above bearing.
FIG. 25 is a cross-sectional view showing a structure of a bearing according to another embodiment.

### Description of Embodiments

### [Outline of Embodiments]

A bearing according to the present disclosure includes: a first raceway member having an annular first raceway surface on an outer circumferential surface thereof; a second raceway member having an annular second raceway surface facing the first raceway surface on an inner circumferential surface thereof; and a plurality of rolling elements arranged in an annular rolling path along the first and second raceway surfaces so as to contact the first and second raceway surfaces. At least one of the first raceway member and the second raceway member has a rolling element feed port formed to communicate with the rolling path. The bearing further includes: a lid member disposed at the rolling element feed port; and a fixing member inserted into a first hole, formed in the lid member, and a second hole, formed in the at least one member to communicate with the first hole, to extend in a direction crossing an axial direction.

In the above bearing, the fixing member is inserted into the first and second holes to extend in a direction crossing the axial direction, and the lid member is fixed to at least one of the first and second raceway members with the fixing member. Therefore, unlike the conventional bearings in which a fixing member for fixing the lid member to a raceway member is inserted in the axial direction, the width of the bearing in the axial direction can be suppressed from increasing even in the case where a long fixing member is used. Thus, the bearing according to the present disclosure can suppress an increase in width in the axial direction thereof.

In the above bearing, the rolling element feed port may be formed in the first raceway member.

In the above bearing, the rolling element feed port may be formed in the second raceway member.

In the above bearing, the fixing member may extend in a direction crossing a radial direction in a cross section orthogonal to the axial direction. With this configuration, the diameter of the bearing can be suppressed from increasing as compared to the case where the fixing member extends along the radial direction in the above cross section.

The above bearing may further include a seal member of an annular shape arranged to close a gap in a radial direction between the first raceway member and the second raceway member. The seal member may include a first seal portion extending in the axial direction and contacting the outer circumferential surface of the first raceway member, and a second seal portion connected to an end portion in the axial direction of the first seal portion, extending away from the first seal portion with increasing distance from the end portion, and contacting the second raceway member at an extended end thereof. With this configuration, the seal member is more easily deflected, and the force received by the seal member from the first and second raceway members decreases. As a result, the frictional force generated between the seal member and the first raceway member and the frictional force generated between the seal member and the second raceway member are reduced, resulting in reduced torque during relative rotation of the first and second raceway members.

In the above bearing, the outer circumferential surface of the first raceway member may have a seal groove formed to be recessed inwardly in the radial direction for fitting the first seal portion therein. With this configuration, as compared to the case where the seal groove is not formed on the outer circumferential surface of the first raceway member, misalignment of the seal member mounted on the first raceway member can be suppressed.

### [Specific Embodiments]

Specific embodiments of the bearing of the present disclosure will now be described with reference to the drawings. In the drawings referenced below, the same or corresponding portions are denoted by the same reference numerals and the description thereof will not be repeated.

### (Embodiment 1)

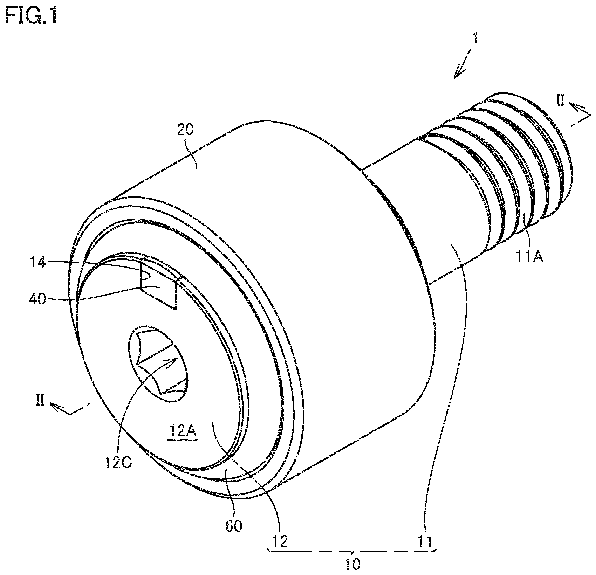

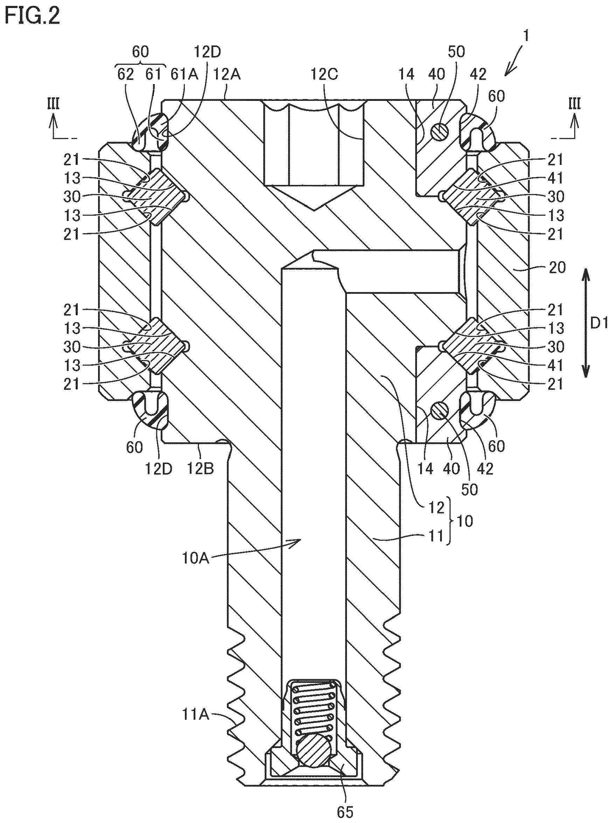

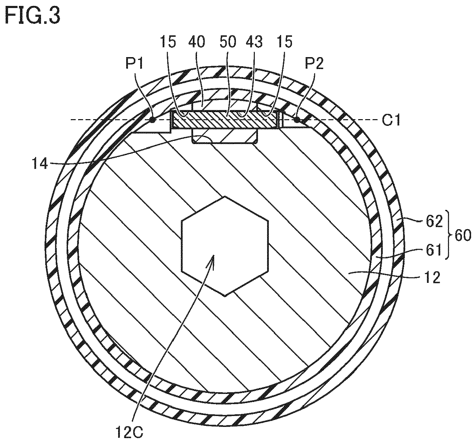

First, the configuration of a bearing 1 according to Embodiment 1 will be described with reference to FIGS. 1 to 3. FIG. 1 is a perspective view showing an external structure of the bearing 1. FIG. 2 is a cross-sectional view along the line segment II-II in FIG. 1. FIG. 3 is a cross-sectional view along the line segment III-III in FIG. 2.

The bearing 1 is a double-row crossed roller type cam follower in which a plurality of rolling elements 30 (cylindrical rollers) are arranged separately in a plurality of rows (two rows) (FIG. 2). As shown in FIG. 2, the bearing 1 primarily includes a first raceway member 10, a second raceway member 20, a plurality of rolling elements 30, a plurality of (in the present embodiment, two) lid members 40, a plurality of (in the present embodiment, two) fixing members 50, and a plurality of (in the present embodiment, two) seal members 60. The first raceway member 10 and the second raceway member 20 are relatively rotatable about an axis via the rolling elements 30. These constituent members will now be described in detail.

The first raceway member 10 is a stud. As shown in FIG. 2, the first raceway member 10 includes a head portion 12 and a shaft portion 11 having an approximately columnar shape with a smaller diameter than the head portion 12. The head portion 12 has an outer circumferential surface on which annular first raceway surfaces 13 are formed in a plurality of (in the present embodiment, two) rows in an axial direction D1. In a cross section along the axial direction D1 of the bearing 1 (FIG. 2), the first raceway surfaces 13 are inclined with respect to the axial direction D1 to define V-shaped grooves.

The head portion 12 has a first end surface 12A and a second end surface 12B opposite to the first end surface 12A in the axial direction D1 (FIG. 2). As shown in FIG. 2, the first end surface 12A has a mounting tool hole 12C formed therein having a predetermined depth in the axial direction D1. The shaft portion 11 extends straight from the second end surface 12B in the axial direction D1. As shown in FIG. 2, the shaft portion 11 has a screw groove 11A formed on an outer circumferential surface of its tip end portion (opposite to the portion connected to the second end surface 12B).

The first raceway member 10 has a grease supply passage 10A formed therein. As shown in FIG. 2, the grease supply passage 10A is open at the tip end portion of the shaft portion 11, and also open at the outer circumferential surface of the head portion 12, at a portion between two first raceway surfaces 13. At the tip end portion of the shaft portion 11, a grease nipple 65 is disposed at the opening of the grease supply passage 10A. It should be noted that the grease supply passage 10A is not limited to the form shown in FIG. 2. For example, the grease supply passage 10A may have a structure that penetrates through the first raceway member 10 in the axial direction D1 so as to communicate with the mounting tool hole 12C, and the grease nipple 65 is attachable thereto. Alternatively, the grease supply passage 10A may be omitted.

A portion of the outer circumferential surface of the head portion 12 on the first end surface 12A side relative to the central portion in the axial direction D1 has a ring-shaped first seal groove 12D formed thereon, to which the seal member 60 is fitted. As shown in FIG. 2, the first seal groove 12D is formed to be recessed inwardly in the radial direction. Similarly, a portion of the outer circumferential surface of the head portion 12 on the second end surface 12B side relative to the central portion in the axial direction D1 has a ring-shaped first seal groove 12D formed thereon, to which a seal member 60 is fitted.

The second raceway member 20 is an annular member having an inside diameter greater than the outside diameter of the head portion 12. A portion of the head portion 12 is accommodated inside the second raceway member 20 in the radial direction. The second raceway member 20 has annular second raceway surfaces 21 facing the first raceway surfaces 13 on its inner circumferential surface. As shown in FIG. 2, the second raceway surfaces 21, as with the first raceway surfaces 13, are formed in a plurality of (in the present embodiment, two) rows in the axial direction D1. In the cross section along the axial direction D1 of the bearing 1 (FIG. 2), the second raceway surfaces 21 are inclined with respect to the axial direction D1 to define V-shaped grooves which are recessed in the direction opposite to the V-shaped grooves formed by the first raceway surfaces 13. Annular regions along the first raceway surfaces 13 and the second raceway surfaces 21 are rolling paths for the rolling elements 30.

The rolling elements 30 are cylindrical rollers, for example. The rolling elements 30 are arranged in the above-described rolling paths (regions between the first raceway surfaces 13 and the second raceway surfaces 21) so as to contact the first raceway surfaces 13 and the second raceway surfaces 21. In the present embodiment, a plurality of rolling elements 30 are arranged such that the circumferentially adjacent rolling elements 30 have their rolling axes orthogonal to each other, although the configuration is not limited thereto.

The first raceway member 10 has rolling element feed ports 14 formed to communicate with the above-described rolling paths. A rolling element feed port 14 is a portion for opening the rolling path in the axial direction D1 and has a size through which the rolling elements 30 can be fed into the rolling path. As shown in FIG. 1, the rolling element feed port 14 is formed by inwardly cutting off a portion of an outer periphery of the first end surface 12A of the head portion 12 and a portion of the outer circumferential surface of the head portion 12. The lid members 40 are disposed at the rolling element feed ports 14.

As shown in FIG. 2, a lid member 40 has a third raceway surface 41 formed against which the rolling elements 30 contact. In the cross section along the axial direction D1 of the bearing 1 (FIG. 2), the third raceway surface 41 is inclined with respect to the axial direction D1 and defines a V-shaped groove together with the first raceway surface 13. On the outer circumferential surface of the lid member 40, a second seal groove 42 is formed along the circumferential direction to which the seal member 60 is fitted.

FIG. 3 shows a cross section of the bearing 1 orthogonal to the axial direction D1. More specifically, FIG. 3 shows a cross section of a portion of the bearing 1 that includes the head portion 12, a lid member 40, a fixing member 50, and a seal member 60. As shown in FIG. 3, the lid member 40 has a first hole 43 formed to penetrate through the lid member 40 in the above cross section. More specifically, the first hole 43 extends in a direction orthogonal to the radial direction of the head portion 12 in the cross section. As stated from another point of view, in the case where an imaginary chord (straight line segment) C1 is drawn to connect a first point P1 on the outer circumferential surface of the head portion 12 and a second point P2 apart from the first point P1 in the circumferential direction in the above cross section, the first hole 43 penetrates through the lid member 40 so as to extend along the chord C1. The first hole 43 is a circular hole (perfect circle) as seen in the direction in which the first hole 43 extends, and has an inside diameter not smaller than the outside diameter of the fixing member 50.

The head portion 12 has a second hole 15 formed to communicate with the first hole 43. More specifically, as shown in FIG. 3, the second hole 15 is formed in the outer periphery of the head portion 12 so as to be located on each side of the first hole 43 on the chord C1. The second hole 15 is open at an end opposite to the side communicating with the first hole 43. The second hole 15 is a circular hole (perfect circle) as seen in the direction in which the second hole 15 extends, and has an inside diameter (the same as that of the first hole 43) not smaller than the outside diameter of the fixing member 50. The fixing member 50 is inserted into the first hole 43 and the second hole 15 from the above-described opening.

The fixing member 50 (in the present embodiment, a pin member) is inserted (press-fitted) into the first hole 43 and the second hole 15 and extends in a direction crossing the axial direction D1. More specifically, in a cross section orthogonal to the axial direction D1 (FIG. 3), the fixing member 50 extends in the direction crossing (orthogonal to) the radial direction of the head portion 12 and along the chord C1. The fixing member 50 in the present embodiment has a columnar shape and does not have a screw groove on its outer circumferential surface. As shown in FIG. 3, the fixing member 50 has one end in its longitudinal direction located inside the second hole 15 on one side. The other end of the fixing member 50 in its longitudinal direction is located inside the second hole 15 on the other side.

As shown in FIG. 1, the seal member 60 has an annular shape. As shown in FIG. 2, a plurality of (in the present embodiment, two) seal members 60 are arranged to close gaps in the radial direction between the first raceway member 10 (head portion 12) and the second raceway member 20.

As shown in FIG. 2, a seal member 60 includes a first seal portion 61 and a second seal portion 62. The first seal portion 61 extends in the axial direction D1 and contacts the outer circumferential surface of the head portion 12. More specifically, the first seal portion 61 is fitted into the first seal groove 12D and the second seal groove 42.

The second seal portion 62 is connected to one end 61A in the axial direction D1 of the first seal portion 61 and extends away from the first seal portion 61 with increasing distance from the end 61A. More specifically, in the cross section along the axial direction D1 of the bearing 1 (FIG. 2), the second seal portion 62 extends in an arc shape outwardly in the radial direction from the end 61A of the first seal portion 61 and has its extended end contacting an end surface in the axial direction D1 of the second raceway member 20. As stated from another point of view, in the cross section along the axial direction D1 of the bearing 1 (FIG. 2), the seal member 60 has a groove formed therein which extends in the axial direction D1 and is sandwiched between the first seal portion 61 and the second seal portion 62. The groove is formed in a ring shape over the entire circumferential direction of the seal member 60. As shown in FIG. 2, a portion of the end surface in the axial direction D1 of the second raceway member 20 against which the extended end of the second seal portion 62 contacts is recessed inwardly in the axial direction D1 than the other portions of the end surface.

As described above, in the bearing 1 according to the present embodiment, the fixing member 50 is inserted into the first hole 43 and the second hole 15 and extends in a direction orthogonal to the axial direction D1 and the radial direction, and the lid member 40 is fixed to the first raceway member 10 (head portion 12) by the fixing member 50. Therefore, as compared to the case where a fixing member 50 for fixing a lid member 40 is inserted in the axial direction D1, the width of the bearing 1 in the axial direction D1 can be suppressed from increasing even in the case where a long fixing member 50 is used. Thus, the bearing 1 according to the present embodiment can suppress an increase in width in the axial direction D1 thereof.

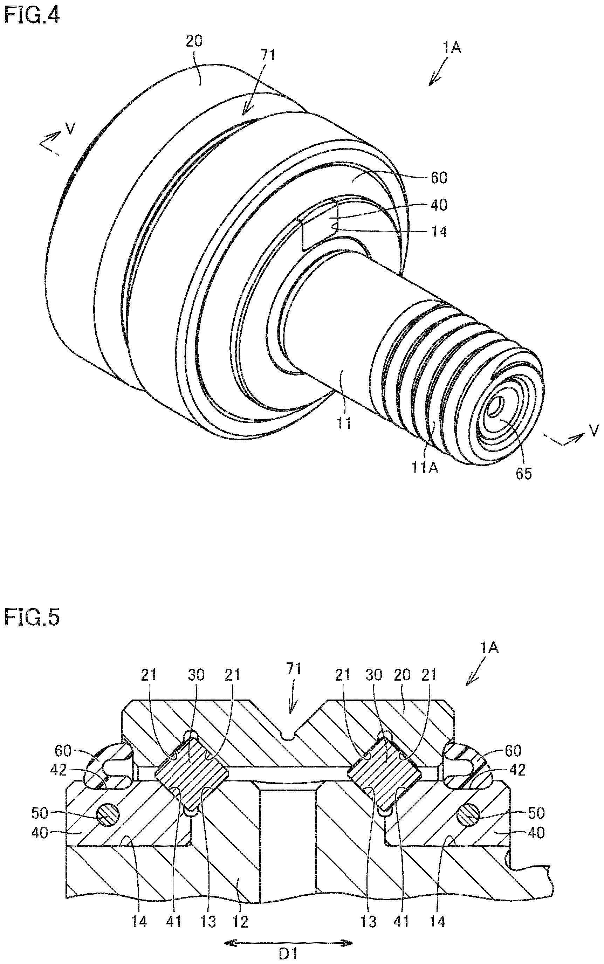

The configurations of bearings according to variations of Embodiment 1 will now be described with reference to FIGS. 4 to 12. FIGS. 4 and 5 show the configuration of a bearing 1A according to Variation 1 of Embodiment 1. FIG. 4 is a perspective view showing an external structure of the bearing 1A. FIG. 5 is a cross-sectional view along the line segment V-V in FIG. 4.

While the bearing 1A basically has a similar configuration as the bearing 1 according to Embodiment 1 above, a V groove 71 is formed on an outer circumferential surface of the second raceway member 20 over the entire circumferential direction (FIG. 4). As shown in FIG. 5, the V groove 71 is formed to be recessed inwardly in the radial direction at an approximately central portion in the axial direction D1 of the outer circumferential surface of the second raceway member 20.

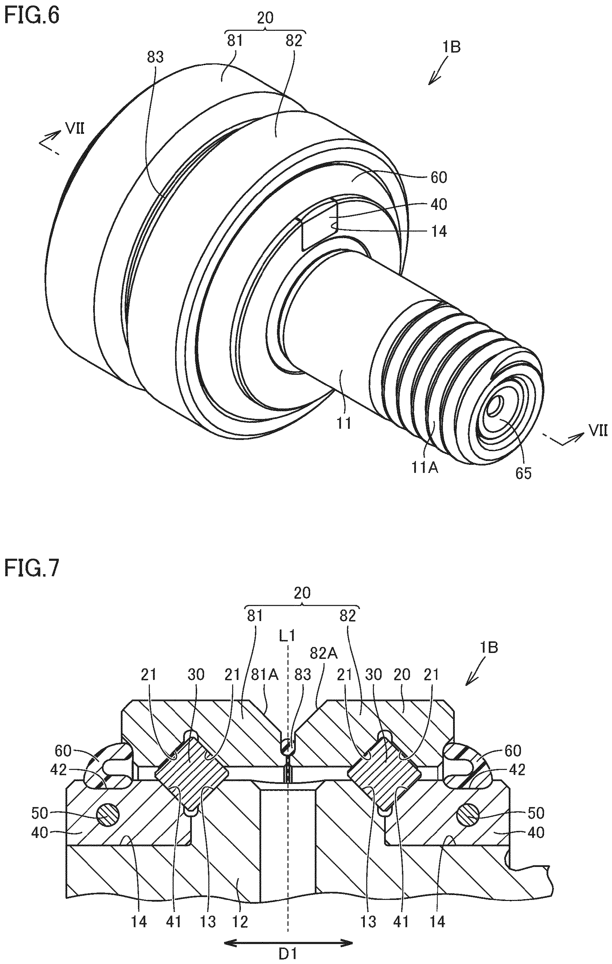

FIGS. 6 and 7 show the configuration of a bearing 1B according to Variation 2 of Embodiment 1. FIG. 6 is a perspective view showing an external structure of the bearing 1B. FIG. 7 is a cross-sectional view along the line segment VII-VII in FIG. 6. While the bearing 1B basically has a similar configuration as the bearing 1 according to Embodiment 1 above, the second raceway member 20 is divided in the axial direction D1. Specifically, as shown in FIG. 7, the second raceway member 20 includes a first ring-shaped portion 81 that has the second raceway surfaces 21 formed on an inner circumferential surface thereof, and a second ring-shaped portion 82 that is aligned with the first ring-shaped portion 81 in the axial direction D1 and has the second raceway surfaces 21 formed on an inner circumferential surface thereof. The first ring-shaped portion 81 and the second ring-shaped portion 82 are approximately equal in inside diameter and outside diameter.

In a cross section along the axial direction D1 of the bearing 1B (FIG. 7), a portion of the outer circumferential surface of the first ring-shaped portion 81 adjacent to the second ring-shaped portion 82 is inclined inwardly in the radial direction with respect to the axial direction D1. On the other hand, in the above cross section, a portion of the outer circumferential surface of the second ring-shaped portion 82 adj acent to the first ring-shaped portion 81 is inclined inwardly in the radial direction with respect to the axial direction D1. As shown in FIG. 7, in the cross section along the axial direction D1 of the bearing 1B, a first inclined surface 81A formed on the outer circumferential surface of the first ring-shaped portion 81 and a second inclined surface 82A formed on the outer circumferential surface of the second ring-shaped portion 82 are symmetrical about an imaginary line L1 extending in the radial direction. The first inclined surface 81A and the second inclined surface 82A define a V groove recessed inwardly in the radial direction in the above cross section. An O ring 83 is disposed between the first ring-shaped portion 81 and the second ring-shaped portion 82. It should be noted that the O ring 83 is preferably omitted in the case where there is a large difference between the number of revolutions of the first ring-shaped portion 81 and the number of revolutions of the second ring-shaped portion 82.

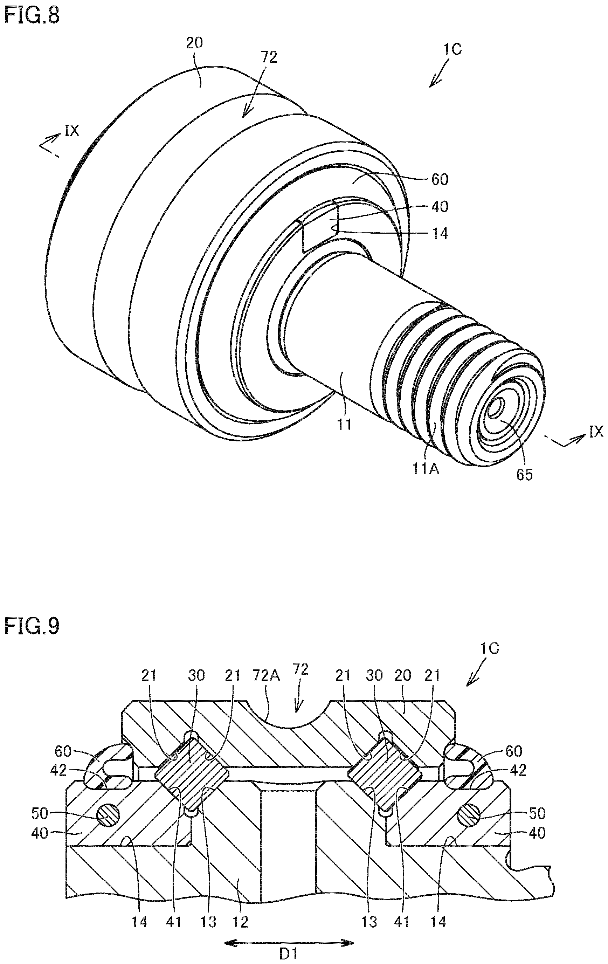

FIGS. 8 and 9 show the configuration of a bearing 1C according to Variation 3 of Embodiment 1. FIG. 8 is a perspective view showing an external structure of the bearing 1C. FIG. 9 is a cross-sectional view along the line segment IX-IX in FIG. 8.

While the bearing 1C basically has a similar configuration as the bearing 1 according to Embodiment 1 above, an R groove 72 is formed on an outer circumferential surface of the second raceway member 20 over the entire circumferential direction (FIG. 8). As shown in FIG. 9, the R groove 72 is formed to be recessed inwardly in the radial direction at an approximately central portion in the axial direction D1 of the outer circumferential surface of the second raceway member 20. More specifically, in the cross section along the axial direction D1 of the bearing 1C, the R groove 72 is defined by a bottom surface 72Athat bulges in an arc shape inwardly in the radial direction. It should be noted that in Variation 3, the second raceway member 20 may be divided in the axial direction D1.

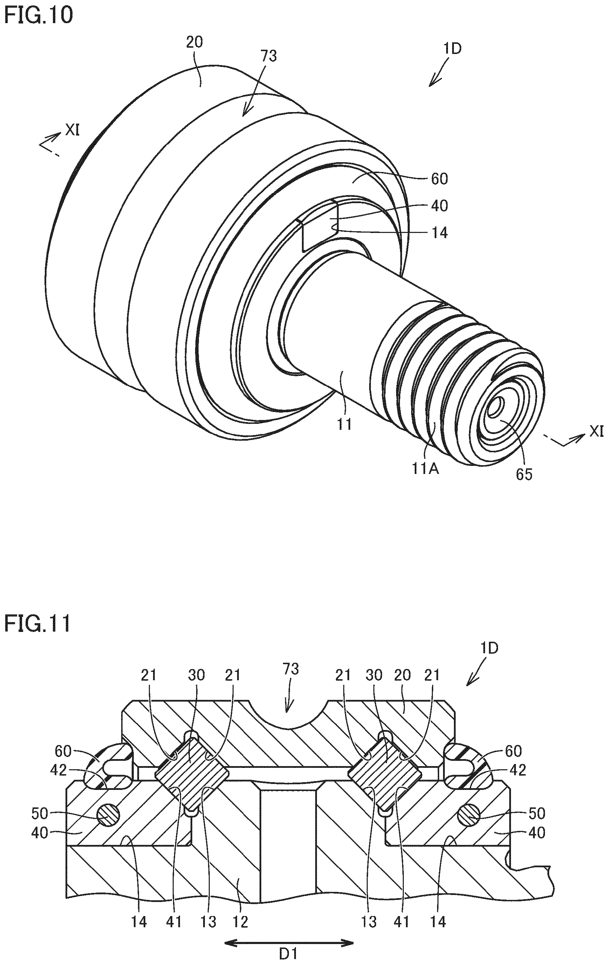

FIGS. 10 and 11 show the configuration of a bearing 1D according to Variation 4 of Embodiment 1. FIG. 10 is a perspective view showing an external structure of the bearing 1D. FIG. 11 is a cross-sectional view along the line segment XI-XI in FIG. 10.

While the bearing 1D basically has a similar configuration as the bearing 1 according to Embodiment 1 above, a gothic arch groove 73 is formed on an outer circumferential surface of the second raceway member 20 over the entire circumferential direction (FIG. 10). As shown in FIG. 10, the gothic arch groove 73 is formed to be recessed inwardly in the radial direction at an approximately central portion in the axial direction D1 of the outer circumferential surface of the second raceway member 20. It should be noted that in Variation 4, the second raceway member 20 may be divided in the axial direction D1.

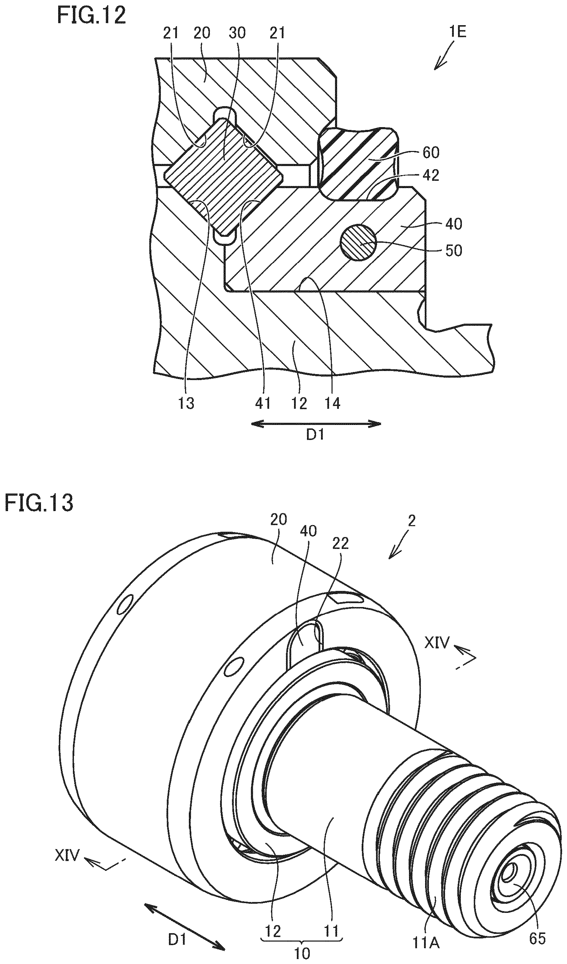

FIG. 12 is a partial cross-sectional view along an axial direction D1 of a bearing 1E according to Variation 5 of Embodiment 1. While the bearing 1E basically has a similar configuration as the bearing 1 according to Embodiment 1 above, it differs in the shape of the seal member. As shown in FIG. 12, the seal member 60 in Variation 5 has an approximately quadrangular shape in the cross section along the axial direction D1, with each side curved in an arc shape toward the center.

### (Embodiment 2)

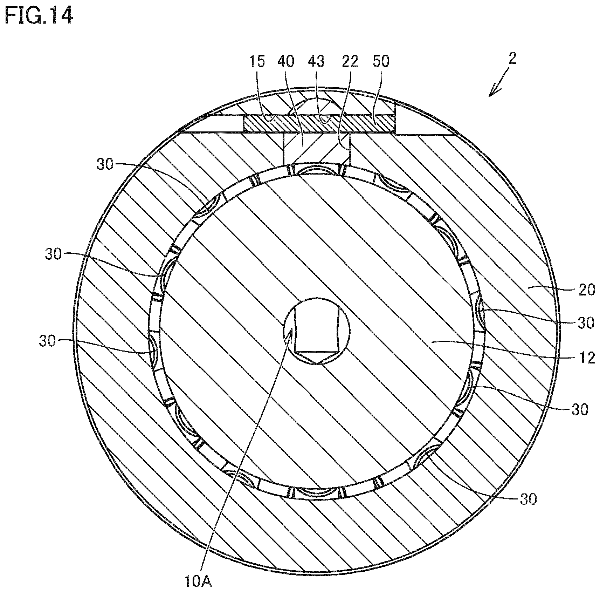

The configuration of a bearing 2 according to Embodiment 2 will now be described with reference to FIGS. 13 and 14. While the bearing 2 according to Embodiment 2 basically has a similar configuration and provides similar effects as the bearing 1 according to Embodiment 1 above, Embodiment 2 differs from Embodiment 1 in that a rolling element feed port 22 is formed in the second raceway member 20. In the following, only the differences from Embodiment 1 above will be described.

FIG. 13 is a perspective view showing an external structure of the bearing 2. As shown in FIG. 13, in the bearing 2, the rolling element feed port 22 communicating with the rolling paths for the rolling elements is formed at a portion in the circumferential direction of an end surface of the second raceway member 20 in the axial direction D1. More specifically, the rolling element feed port 22 is formed by cutting off an end surface on one side (on the shaft portion 11 side) of the second raceway member 20 to a predetermined depth in the axial direction D1. A lid member 40 is disposed at the rolling element feed port 22 to close the rolling element feed port 22.

FIG. 14 shows a cross section perpendicular to the axial direction D1 of the bearing 2. More specifically, FIG. 14 shows a cross section of a portion of the bearing 2 that includes the head portion 12, the second raceway member 20, the lid member 40, and the fixing member 50. As shown in FIG. 14, the lid member 40 has a first hole 43 formed to be orthogonal to the radial direction in the above cross section and to penetrate through the lid member 40. On the other hand, the second raceway member 20 has a second hole 15 formed to communicate with the first hole 43 and to extend straight in the same direction as the first hole 43 in the above cross section (FIG. 14). The second hole 15 is open at an end opposite to the side communicating with the first hole 43. From this opening, the fixing member 50 is inserted into the first hole 43 and the second hole 15 to fix the lid member 40 to the second raceway member 20. The fixing member 50 has a columnar shape longer than the first hole 43 and, as in Embodiment 1 above, extends in a direction crossing (orthogonal to) the axial direction D1 and the radial direction.

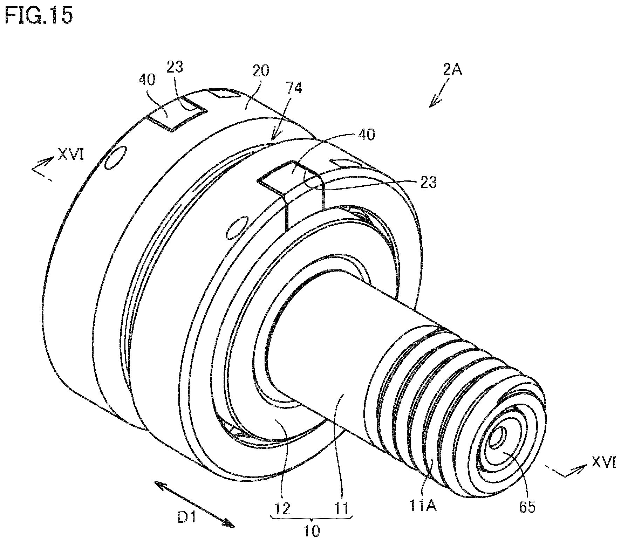

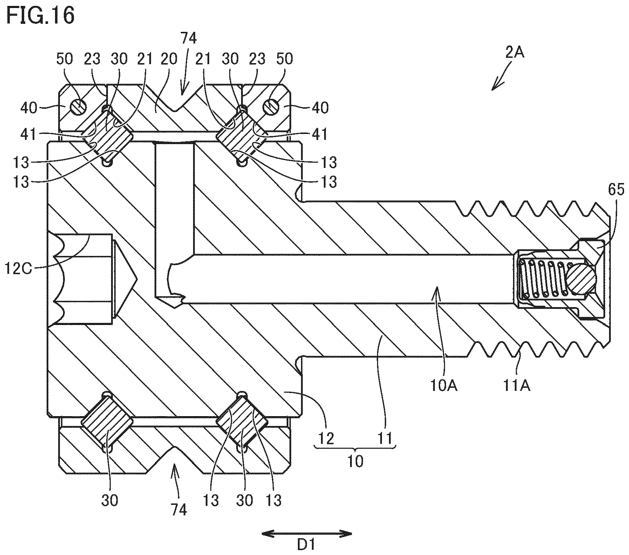

The configurations of bearings according to variations of Embodiment 2 will now be described with reference to FIGS. 15 to 18. FIGS. 15 and 16 show the configuration of a bearing 2A according to Variation 1 of Embodiment 2. FIG. 15 is a perspective view showing an external structure of the bearing 2A. FIG. 16 is a cross-sectional view along the line segment XVI-XVI in FIG. 15.

As shown in FIG. 15, in the bearing 2A according to Variation 1, rolling element feed ports 23 are formed by cutting off the second raceway member 20 inwardly from its end surfaces in the axial direction D1 and its outer circumferential surface. Lid members 40 are disposed at the rolling element feed ports 23.

As shown in FIG. 16, a lid member 40 has a third raceway surface 41 against which the rolling elements 30 contact. The third raceway surface 41 is inclined with respect to the axial direction D1 in the cross section along the axial direction D1 of the bearing 2A. The third raceway surface 41, together with the second raceway surface 21, defines a V-shaped groove which is recessed outwardly in the radial direction. As in Embodiment 2 above, a columnar fixing member 50 is inserted into the lid member 40, extending in the direction crossing (orthogonal to) the axial direction D1 and the radial direction.

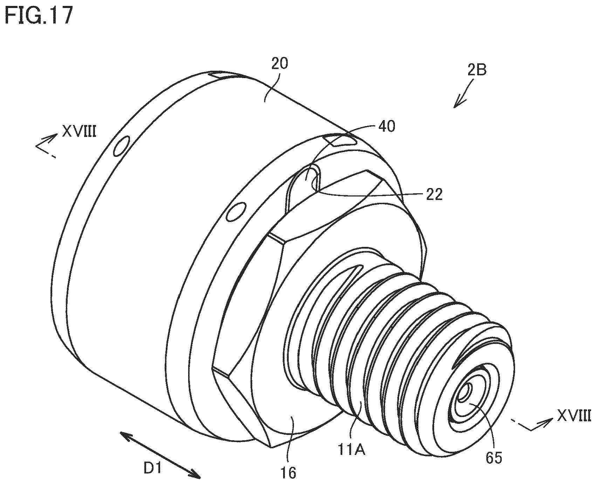

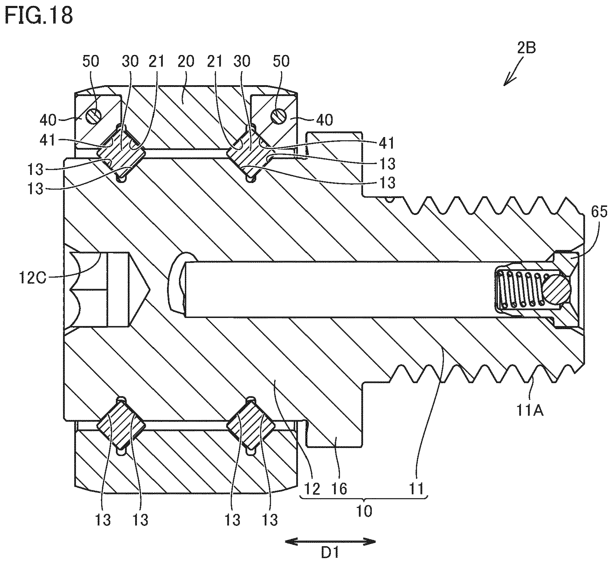

FIGS. 17 and 18 show the configuration of a bearing 2B according to Variation 2 of Embodiment 2. FIG. 17 is a perspective view showing an external structure of the bearing 2B. FIG. 18 is a cross-sectional view along the line segment XVIII-XVIII in FIG. 17.

As shown in FIG. 18, the first raceway member 10 in the present variation further includes a nut portion 16 that is provided at a portion of the shaft portion 11 connected to the head portion 12. The nut portion 16 is provided to extend outwardly from the shaft portion 11 in the radial direction. The nut portion 16 has an outside diameter greater than the outside diameter of the head portion 12 and smaller than the outside diameter of the second raceway member 20. As shown in FIG. 17, the nut portion 16 has a hexagonal shape as seen in the axial direction D1, although it is not limited to this shape.

### (Embodiment 3)

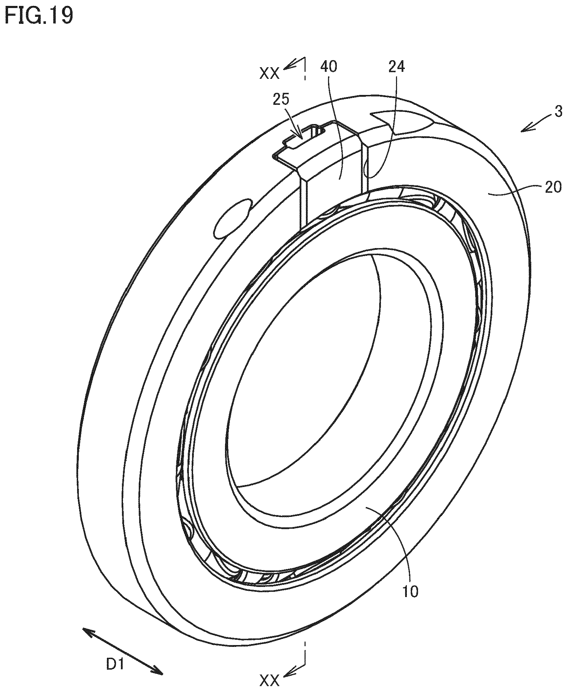

The configuration of a bearing 3 according to Embodiment 3 will now be described with reference to FIGS. 19 to 21. While the bearing 3 according to Embodiment 3 basically has a similar configuration and provides similar effects as the bearing 2A shown in FIG. 15, it differs in that the first raceway member 10 is an annular member instead of a stud.

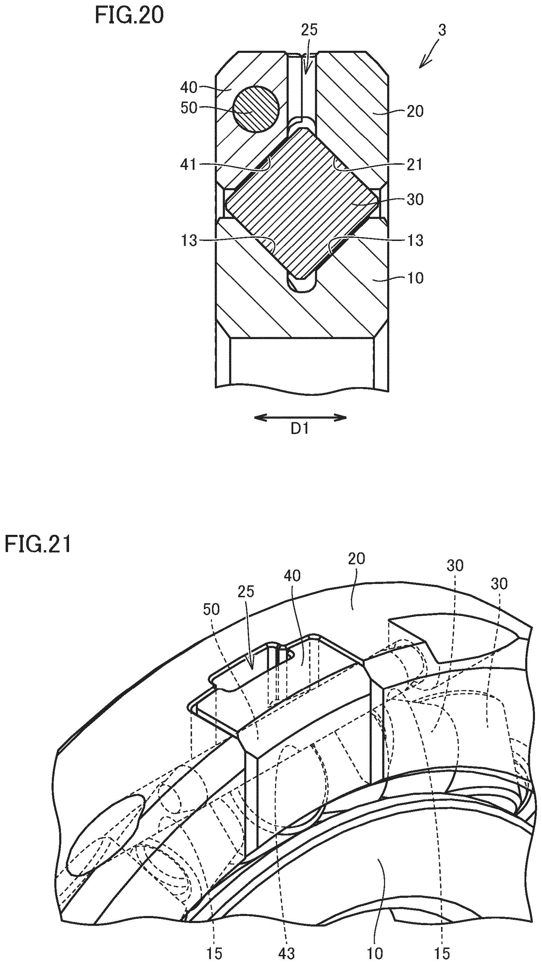

FIG. 19 is a perspective view showing an external structure of the bearing 3. FIG. 20 is a cross-sectional view along the line segment XX-XX in FIG. 19. FIG. 21 is an enlarged view showing the vicinity of a lid member 40 in the bearing 3. As shown in FIG. 19, the first raceway member 10 has an annular shape and is disposed inside the second raceway member 20 in the radial direction. The first raceway member 10 has an outside diameter smaller than an inside diameter of the second raceway member 20. The first raceway member 10 has a width in the axial direction D1 approximately equal to a width in the axial direction D1 of the second raceway member 20. A rolling element feed port 24 is formed in the second raceway member 20.

As shown in FIG. 20, the first raceway member 10 has annular first raceway surfaces 13 formed on its outer circumferential surface. On the outer circumferential surface of the first raceway member 10, a V-shaped groove is formed which is recessed inwardly in the radial direction and is defined by the first raceway surfaces 13.

As shown in FIG. 21, the lid member 40 has a first hole 43 formed into which a fixing member 50 is inserted. On the other hand, the second raceway member 20 has a second hole 15 formed to communicate with the first hole 43 and into which the fixing member 50 is inserted. There is a gap 25 of a long hole shape formed between the lid member 40 and the second raceway member 20 to extend in the circumferential direction. As shown in FIG. 20, the gap 25 communicates with a rolling path for the rolling elements 30 (region surrounded by the first raceway surfaces 13, the second raceway surfaces 21, and the third raceway surface 41).

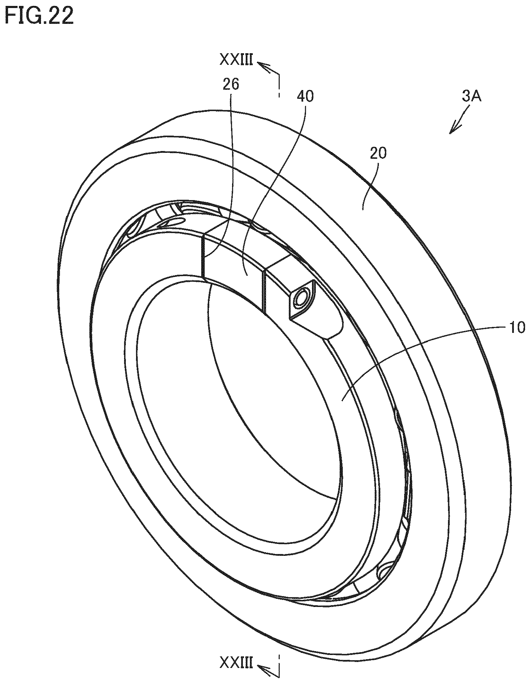

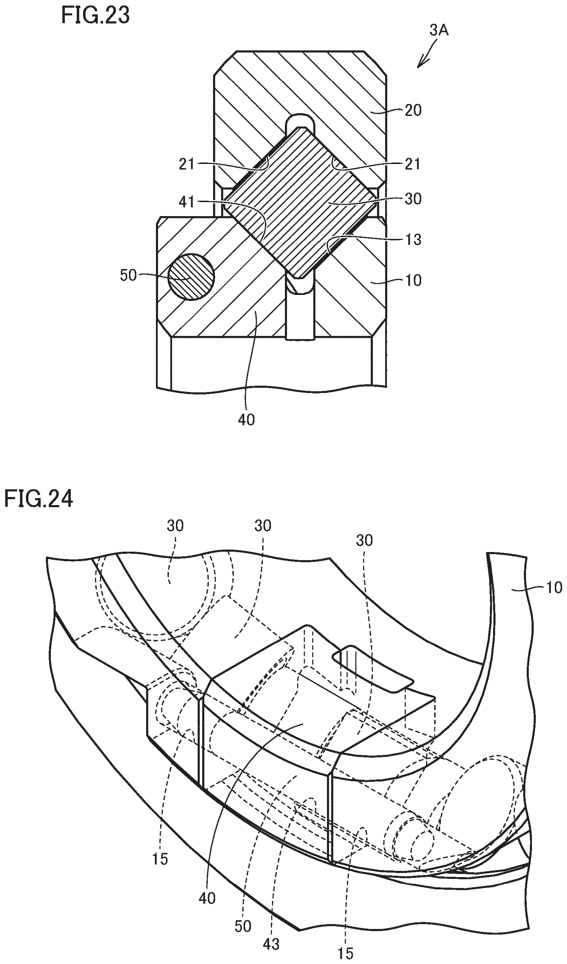

FIGS. 22 to 24 show the configuration of a bearing 3A according to a variation of Embodiment 3. FIG. 22 is a perspective view showing an external structure of the bearing 3A. FIG. 23 is a partial cross-sectional view along the line segment XXIII-XXIII in FIG. 22. FIG. 24 is an enlarged view showing the vicinity of a lid member 40 in the bearing 3A.

As shown in FIG. 22, in the present variation, a rolling element feed port 26 is formed in the first raceway member 10 of the annular shape, and a lid member 40 is disposed at the rolling element feed port 26. As shown in FIG. 23, the lid member 40 has a third raceway surface 41 against which the rolling elements 30 contact. The third raceway surface 41, together with the first raceway surface 13, defines a V groove which is recessed inwardly in the radial direction.

As shown in FIG. 24, the lid member 40 has a first hole 43 formed into which a fixing member 50 is inserted. On the other hand, at portions of the first raceway member 10 adj acent to the lid member 40 in the circumferential direction, a second hole 15 is formed which communicates with the first hole 43 and into which the fixing member 50 is inserted. The fixing member 50 extends in a direction crossing (orthogonal to) the axial direction D1 and the radial direction, as in Embodiments 1 to 3 above and Variations of Embodiments 1 and 2 above.

### (Other Embodiments)

Other embodiments will now be described.

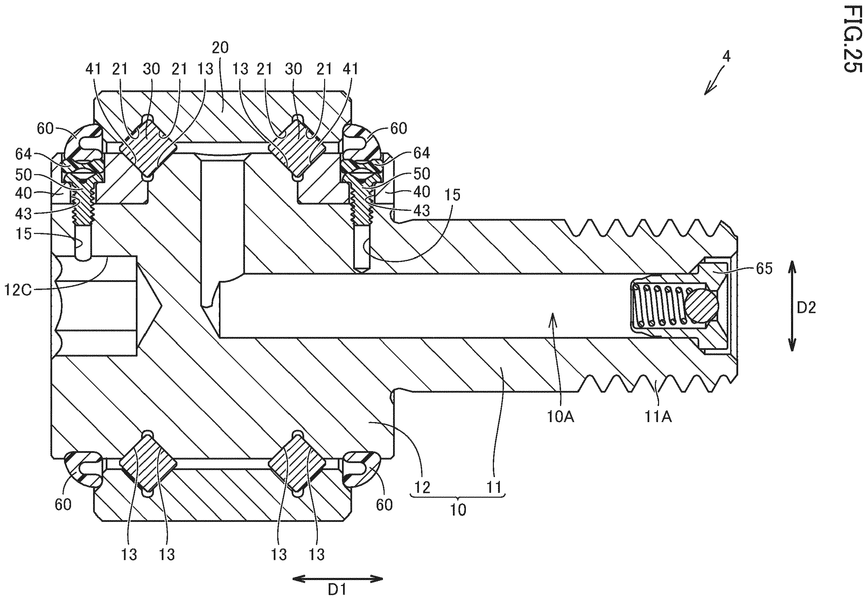

In Embodiments 1 to 3 and their variations above, the case where the fixing member 50 is orthogonal to the axial direction D1 and the radial direction has been described as an example, although the invention is not limited thereto. As shown in FIG. 25, in a cross section along an axial direction D1 of a bearing 4, the first holes 43 and the second holes 15 may be formed to extend along a radial direction D2, and the fixing members 50 (bolts) may extend in the radial direction D2. In this case, as shown in FIG. 25, buffer members 64 are preferably disposed between the head portions of the fixing members 50 and the seal members 60.

In Embodiments 1 and 2 and their variations above, the case where a plurality of rolling elements 30 are arranged in a plurality of rows in the axial direction D1 has been described as an example, although the invention is not limited thereto and the rolling elements may be arranged in a single row. Furthermore, the rolling elements 30 are not limited to the cylindrical rollers and may be balls, for example.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

1, 1A, 1B, 1C, 1D, 1E, 2, 2A, 2B, 3, 3A, 4: bearing; 10: first raceway member; 10A: grease supply passage; 11: shaft portion; 11A: screw groove; 12: head portion; 12A: first end surface; 12B: second end surface; 12C: mounting tool hole; 12D: first seal groove; 13: first raceway surface; 14, 22, 23, 24, 26: rolling element feed port; 15: second hole; 16: nut portion; 20: second raceway member; 21: second raceway surface; 25: gap; 30: rolling element; 40: lid member; 41: third raceway surface; 42: second seal groove; 43: first hole; 50: fixing member; 60: seal member; 61: first seal portion; 61A: end; 62: second seal portion; 64: buffer member; 65: grease nipple; 71: V groove; 72: R groove; 72A: bottom surface; 73: gothic arch groove; 81: first ring-shaped portion; 81A: first inclined surface; 82: second ring-shaped portion; 82A: second inclined surface; 83: O ring; C1: chord; D1: axial direction; D2: radial direction; L1: imaginary line; P1: first point; and P2: second point.

## Claims

1. A bearing comprising:
a first raceway member having an annular first raceway surface on an outer circumferential surface thereof;
a second raceway member having an annular second raceway surface facing the first raceway surface on an inner circumferential surface thereof; and
a plurality of rolling elements arranged in an annular rolling path along the first and second raceway surfaces so as to contact the first and second raceway surfaces;
at least one of the first raceway member and the second raceway member having a rolling element feed port formed to communicate with the rolling path,
the bearing further comprising:
a lid member disposed at the rolling element feed port; and
a fixing member inserted into a first hole, formed in the lid member, and a second hole, formed in the at least one member to communicate with the first hole, to extend in a direction crossing an axial direction.

2. The bearing according to claim 1, wherein the rolling element feed port is formed in the first raceway member.

3. The bearing according to claim 1, wherein the rolling element feed port is formed in the second raceway member.

4. The bearing according to any one of claims 1 to 3, wherein the fixing member extends in a direction crossing a radial direction in a cross section orthogonal to the axial direction.

5. The bearing according to any one of claims 1 to 4, further comprising a seal member of an annular shape arranged to close a gap in a radial direction between the first raceway member and the second raceway member,
the seal member including
a first seal portion extending in the axial direction and contacting the outer circumferential surface of the first raceway member, and
a second seal portion connected to an end portion in the axial direction of the first seal portion, extending away from the first seal portion with increasing distance from the end portion, and contacting the second raceway member at an extended end thereof.

6. The bearing according to claim 5, wherein the outer circumferential surface of the first raceway member has a seal groove formed to be recessed inwardly in the radial direction for fitting the first seal portion therein.
